(19) Europäisches Patentamt
European Patent Office
Office européen des brevets

(11) EP 0 900 011 B1

(12) **EUROPÄISCHE PATENTSCHRIFT**

(45) Veröffentlichungstag und Bekanntmachung des Hinweises auf die Patenterteilung:
**03.04.2002 Patentblatt 2002/14**

(21) Anmeldenummer: **97920739.6**

(22) Anmeldetag: **23.04.1997**

(51) Int Cl.[7]: **A01N 37/52**, A01N 47/24
// (A01N37/52, 47:12),
(A01N47/24, 47:12)

(86) Internationale Anmeldenummer:
**PCT/EP97/02048**

(87) Internationale Veröffentlichungsnummer:
**WO 97/40678 (06.11.1997 Gazette 1997/47)**

(54) **FUNGIZIDE MISCHUNGEN**

FUNGICIDE MIXTURES

MELANGES FUNGICIDES

(84) Benannte Vertragsstaaten:
**AT BE CH DE DK ES FI FR GB GR IE IT LI NL PT SE**
Benannte Erstreckungsstaaten:
**SI**

(30) Priorität: **26.04.1996 DE 19616689**
**29.04.1996 DE 19617069**
**02.09.1996 DE 19635505**

(43) Veröffentlichungstag der Anmeldung:
**10.03.1999 Patentblatt 1999/10**

(73) Patentinhaber: **BASF AKTIENGESELLSCHAFT**
**67056 Ludwigshafen (DE)**

(72) Erfinder:
- **MÜLLER, Bernd**
  **D-67227 Frankenthal (DE)**
- **SAUTER, Hubert**
  **D-68167 Mannheim (DE)**
- **AMMERMANN, Eberhard**
  **D-64646 Heppenheim (DE)**
- **LORENZ, Gisela**
  **D-67434 Hambach (DE)**
- **STRATHMANN, Siegfried**
  **D-67117 Limburgerhof (DE)**
- **SCHELBERGER, Klaus**
  **D-67161 Gönnheim (DE)**
- **SCHERER, Maria**
  **D-76829 Landau (DE)**
- **MAPPES, Dietrich**
  **D-67368 Westheim (DE)**
- **LEYENDECKER, Joachim**
  **D-67454 Hassloch (DE)**
- **BAYER, Herbert**
  **D-68159 Mannheim (DE)**
- **MÜLLER, Ruth**
  **D-67159 Friedelsheim (DE)**

(56) Entgegenhaltungen:
**EP-A- 0 610 764** **WO-A-95/21153**
**WO-A-96/01256** **WO-A-96/01258**
**DE-A- 19 528 651**

- **PESTICIDE SCIENCE, Bd. 44, Nr. 1, Mai 1995, Seiten 77-79, XP002020496 FRAINE DE P J ET AL: "A NEW SERIES OF BROAD-SPECTRUM BETA-METHOXYACRYLATE FUNGICIDES WITH AN OXIME ETHER SIDE-CHAIN"**
- **RESEARCH DISCLOSURE, Nr. 348, 1.April 1993, Seite 267, COMPL XP000304224 "MIXTURES OF FUNGICIDES AND HERBICIDES"**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 0 900 011 B1

## Beschreibung

Die vorliegende Erfindung betrifft eine fungizide Mischung, welche

a) ein Carbamat der Formel I,

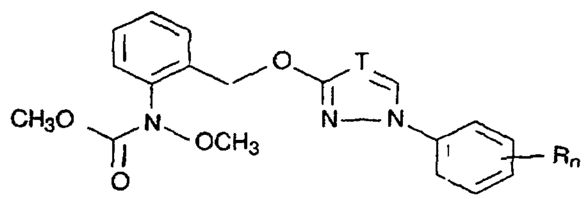

(I)

in der T CH und N bedeutet, n für 0, 1 oder 2 steht und R Halogen, $C_1$-$C_4$-Alkyl oder $C_1$-$C_4$-Halogenalkyl bedeutet, wobei die Reste R verschieden sein können, wenn n für 2 steht, und/oder

b) einen Oximether der Formel II,

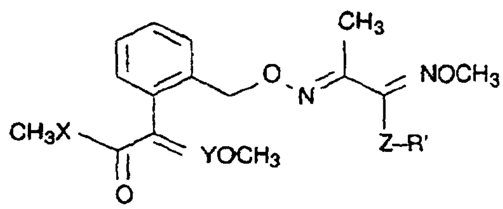

(II)

in der die Substituenten die folgende Bedeutung haben:

X Sauerstoff oder Amino (NH);

Y CH oder N;

Z Sauerstoff, Schwefel, Amino (NH) oder $C_1$-$C_4$-Alkylamino (N-$C_1$-$C_4$-Alkyl);

R' $C_1$-$C_6$-Alkyl, $C_1$-$C_6$-Halogenalkyl, $C_3$-$C_6$-Alkenyl, $C_2$-$C_6$-Halogenalkenyl, $C_3$-$C_6$-Alkinyl, $C_3$-$C_6$-Halogenalkinyl, $C_3$-$C_6$-Cycloalkyl-methyl, oder Benzyl, welches partiell oder vollständig halogeniert sein kann und/ oder einen bis drei der folgenden Reste tragen kann: Cyano, $C_1$-$C_4$-Alkyl, $C_1$-$C_4$-Halogenalkyl, $C_1$-$C_4$-Alkoxy, $C_1$-$C_4$-Halogenalkoxy und $C_1$-$C_4$-Alkylthio;

c) einem Carbamat der Formel III

$$(CH_3)_2N\text{-}CH_2CH_2CH_2\text{-}NH\text{-}CO_2\text{-}CH_2CH_2CH_3 \qquad III$$

in einer synergistisch wirksamen Menge enthält.

Außerdem betrifft die Erfindung Verfahren zur Bekämpfung von Schadpilzen mit Mischungen der Verbindungen I und/oder II und III und die Verwendung der Verbindungen I und/oder II und der Verbindung III zur Herstellung derartiger Mischungen.

Die Verbindungen der Formel I, ihre Herstellung und ihre Wirkung gegen Schadpilze ist aus der Literatur bekannt (WO-A 96/01,256 und WO-A 96/01,258).

Verbindungen der Formel II, ihre Herstellung und ihre Wirkung gegen Schadpilze sind in den WO-A 95/21,153, WO-A 95/21,154 und DE 1 95 28 651.0 beschrieben.

Ebenfalls bekannt ist die Verbindung III, ihre Herstellung und ihre Verwendung (*DE-OS 15 67 169,* common name: Propamocarb).

Im Hinblick auf eine Senkung der Aufwandmengen und eine Verbesserung des Wirkungsspektrums der bekannten. Verbindungen lagen der vorliegenden Erfindungen Mischungen als Aufgabe zugrunde, die bei verringerter Gesamtmenge an ausgebrachten Wirkstoffen eine verbesserte Wirkung gegen Schadpilze aufweisen (synergistische Mischungen).

Demgemäß wurden die eingangs definierten Mischungen gefunden. Es wurde außerdem gefunden, daß sich bei gleichzeitiger gemeinsamer oder getrennter Anwendung der Verbindungen I und/oder II und der Verbindungen III oder bei Anwendung der Verbindungen I und/oder II und der Verbindungen III nacheinander Schadpilze besser bekämpfen lassen als mit den Einzelverbindungen.

Die Formel I repräsentiert insbesondere Carbamate, in denen die Kombination der Substituenten einer Zeile der folgenden Tabelle entspricht:

| Nr. | X | $R_n$ |
|---|---|---|
| I.1 | N | 2-F |
| I.2 | N | 3-F |
| I.3 | N | 4-F |
| I.4 | N | 2-Cl |
| I.5 | N | 3-Cl |
| I.6 | N | 4-Cl |
| I.7 | N | 2-Br |
| I.8 | N | 3-Br |
| I.9 | N | 4-Br |
| I.10 | N | 2-$CH_3$ |
| I.11 | N | 3-$CH_3$ |
| I.12 | N | 4-$CH_3$ |
| I.13 | N | 2-$CH_2CH_3$ |
| I.14 | N | 3-$CH_2CH_3$ |
| I.15 | N | 4-$CH_2CH_3$ |
| I.16 | N | 2-$CH(CH_3)_2$ |
| I.17 | N | 3-$CH(CH_3)_2$ |
| I.18 | N | 4-$CH(CH_3)_2$ |
| I.19 | N | 2-$CF_3$ |
| I.20 | N | 3-$CF_3$ |
| I.21 | N | 4-$CF_3$ |
| I.22 | N | 2,4-$F_2$ |
| I.23 | N | 2,4-$Cl_2$ |
| I.24 | N | 3,4-$Cl_2$ |
| I.25 | N | 2-Cl, 4-$CH_3$ |
| I.26 | N | 3-Cl, 4-$CH_3$ |
| I.27 | CH | 2-F |
| I.28 | CH | 3-F |
| I.29 | CH | 4-F |
| I.30 | CH | 2-Cl |
| I.31 | CH | 3-Cl |

(fortgesetzt)

| Nr. | X | $R_n$ |
|---|---|---|
| I.32 | CH | 4-Cl |
| I.33 | CH | 2-Br |
| I.34 | CH | 3-Br |
| I.35 | CH | 4-Br |
| I.36 | CH | $2\text{-}CH_3$ |
| I.37 | CH | $3\text{-}CH_3$ |
| I.38 | CH | $4\text{-}CH_3$ |
| I.39 | CH | $2\text{-}CH_2CH_3$ |
| I.40 | CH | $3\text{-}CH_2CH_3$ |
| I.41 | CH | $4\text{-}CH_2CH_3$ |
| I.42 | CH | $2\text{-}CH(CH_3)_2$ |
| I.43 | CH | $3\text{-}CH(CH_3)_2$ |
| I.44 | CH | $4\text{-}CH(CH_3)_2$ |
| I.45 | CH | $2\text{-}CF_3$ |
| I.46 | CH | $3\text{-}CF_3$ |
| I.47 | CH | $4\text{-}CF_3$ |
| I.48 | CH | $2,4\text{-}F_2$ |
| I.49 | CH | $2,4\text{-}Cl_2$ |
| I.50 | CH | $3,4\text{-}Cl_2$ |
| I.51 | CH | $2\text{-}Cl, 4\text{-}CH_3$ |
| I.52 | CH | $3\text{-}Cl, 4\text{-}CH_3$ |

Besonders bevorzugt werden die Verbindungen I.12, I.23, I.32 und I.38.

Die allgemeine Formel II steht insbesondere repräsentativ für Methoxy-Acrylester und für Oximether, in denen X Sauerstoff und Y CH bedeutet oder X Amino und Y N bedeutet.

Außerdem werden Verbindungen II bevorzugt, in denen Z für Sauerstoff steht.

Gleichermaßen werden Verbindungen II bevorzugt, in denen R' für Alkyl oder Benzyl steht.

Im Hinblick auf ihre Verwendung in den erfindungsgemäßen synergistischen Mischungen werden insbesondere die in den folgenden Tabellen zusammengestellten Verbindungen II bevorzugt:

Tabelle 2.

Verbindungen der Formel IIA, in denen ZR' für eine Verbindung jeweils einer Zeile der Tabelle A entspricht

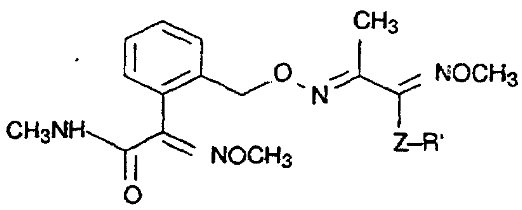

(IIA)

Tabelle 3.

Verbindungen der Formel IIB, in denen ZR' für eine Verbindung jeweils einer Zeile der Tabelle A entspricht

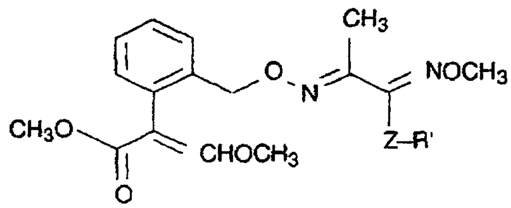

(IIB)

Tabelle A:

| Nr. | ZR' |
|---|---|
| II.1 | $O\text{-}CH_2CH_2CH_3$ |
| II.2 | $O\text{-}CH(CH_3)_2$ |
| II.3 | $O\text{-}CH_2CH_2CH_2CH_3$ |
| II.4 | $O\text{-}CH(CH_3)CH_2CH_3$ |
| II.5 | $O\text{-}CH_2CH(CH_3)_2$ |
| II.6 | $O\text{-}C(CH_3)_3$ |
| II.7 | $S\text{-}C(CH_3)_3$ |
| II.8 | $O\text{-}CH(CH_3)CH_2CH_2CH_3$ |
| II.9 | $O\text{-}CH_2C(CH_3)_3$ |
| II.10 | $O\text{-}CH_2C(Cl)=CCl_2$ |
| II.11 | $O\text{-}CH_2CH=CH\text{-}Cl$ (trans) |
| II.12 | $O\text{-}CH_2C(CH_3)=CH_2$ |
| II.13 | $O\text{-}CH_2$-(cyclopropyl) |
| II.14 | $O\text{-}CH_2\text{-}C_6H_5$ |
| II.15 | $O\text{-}CH_2\text{-}[4\text{-}F\text{-}C_6H_4]$ |
| II.16 | $O\text{-}CH_2CH_3$ |
| II.17 | $O\text{-}CH(CH_2CH_3)_2$ |

Die Verbindungen der Formel II können in Bezug auf die C=Y-Doppelbindung in der E- oder der Z-Konfiguration (in Bezug auf die Carbonsäurefunktion) vorliegen. Demgemäß können sie in der erfindungsgemäßen Mischung jeweils entweder als reine E- oder Z-Isomere oder als E/Z-Isomerenmischung Verwendung finden. Bevorzugt findet jeweils die E/Z-Isomerenmischung oder das E-Isomere Anwendung, wobei das E-Isomere bei der Verbindung II besonders bevorzugt ist.

Die C=N-Doppelbindungen der Oximethergruppierungen in der Seitenkette der Verbindungen II können jeweils als reine E- oder Z-Isomere oder als E/Z-Isomerengemische vorliegen. Die Verbindungen II können sowohl als Isomerengemische als auch als reine Isomere in den erfindungsgemäßen Mischungen verwendet werden. Im Hinblick auf ihre Verwendung werden insbesondere Verbindungen II bevorzugt, in denen die endständige Oximethergruppierung der Seitenkette in der cis-Konfiguration vorliegt ($OCH_3$-Gruppe zu ZR').

Die Verbindungen I und II sind wegen des basischen Charakters in der Lage, mit anorganischen oder organischen Säuren oder mit Metallionen Salze oder Addukte zu bilden.

Beispiele für anorganische Säuren sind Halogenwasserstoffsäuren wie Fluorwasserstoff, Chlorwasserstoff, Bromwasserstoff und Jodwasserstoff, Schwefelsäure, Phosphorsäure und Salpetersäure.

Als organische Säuren kommen beispielsweise Ameisensäure, Kohlensäure und Alkansäuren wie Essigsäure, Trifluoressigsäure, Trichloressigsäure und Propionsäure sowie Glycolsäure, Thiocyansäure, Milchsäure, Bernsteinsäure, Zitronensäure, Benzoesäure, Zimtsäure, Oxalsäure, Alkylsulfonsäuren (Sulfonsäuren mit geradkettigen oder verzweigten Alkylresten mit 1 bis 20 Kohlenstoffatomen), Arylsulfonsäuren oder -disulfonsäuren (aromatische Reste wie Phenyl und Naphthyl welche eine oder zwei Sulfonsäuregruppen tragen), Alkylphosphonsäuren (Phosphonsäuren mit geradkettigen oder verzweigten Alkylresten mit 1 bis 20 Kohlenstoffatomen), Arylphosphonsäuren oder -diphosphonsäuren (aromatische Reste wie Phenyl und Naphthyl welche eine oder zwei Phosphorsäurereste tragen), wobei die Alkyl- bzw. Arylreste weitere Substituenten tragen können, z.B. p-Toluolsulfonsäure, Salizylsäure, p-Aminosalizylsäure, 2-Phenoxybenzoesäure, 2-Acetoxybenzoesäure etc., in Betracht.

Als Metallionen kommen insbesondere die Ionen der Elemente der zweiten Hauptgruppe, insbesondere Calzium und Magnesium, der dritten und vierten Hauptgruppe, insbesondere Aluminium, Zinn und Blei, sowie der ersten bis achten Nebengruppe, insbesondere Chrom, Mangan, Eisen, Kobalt, Nickel, Kupfer, Zink und andere in Betracht. Besonders bevorzugt sind die Metallionen der Elemente der Nebengruppen der vierten Periode. Die Metalle können dabei in den verschiedenen ihnen zukommenden Wertigkeiten vorliegen.

Bevorzugt setzt man bei der Bereitstellung der Mischungen die reinen Wirkstoffe I, II und III ein, denen man je nach Bedarf weitere Wirkstoffe gegen Schadpilze oder andere Schädlinge wie Insekten, Spinntiere oder Nematoden, oder auch herbizide oder wachstumsregulierende Wirkstoffe oder Düngemittel beimischen kann.

Die Mischungen der Verbindungen I und/oder II und III bzw. die gleichzeitige gemeinsame oder getrennte Verwendung der Verbindungen I und/oder II und III zeichnen sich durch eine hervorragende Wirkung gegen ein breites Spektrum von pflanzenpathogenen Pilzen, insbesondere aus der Klasse der Ascomyceten, Deuteromyceten, Phycomyceten und Basidiomyceten, aus. Sie sind z.T. systemisch wirksam und können daher auch als Blatt- und Bodenfungizide eingesetzt werden.

Besondere Bedeutung haben sie für die Bekämpfung einer Vielzahl von Pilzen an verschiedenen Kulturpflanzen wie Baumwolle, Gemüsepflanzen (z.B. Gurken, Bohnen und Kürbisgewächse), Gerste, Gras, Hafer. Kaffee, Mais, Obstpflanzen, Reis, Roggen, Soja, Wein, Weizen, Zierpflanzen, Zuckerrohr und einer Vielzahl von Samen.

Insbesondere eignen sie sich zur Bekämpfung der folgenden pflanzenpathogenen Pilze: Erysiphe graminis (echter Mehltau) an Getreide, Erysiphe cichoracearum und Sphaerotheca fuliginea an Kürbisgewächsen, Podosphaera leucotricha an Äpfeln, Puccinia-Arten an Getreide, Rhizoctonia-Arten an Baumwolle, Reis und Rasen, Ustilago-Arten an Getreide und Zuckerrohr, Venturia inaequalis (Schorf) an Äpfeln, Helminthosporium-Arten an Getreide, Septoria nodorum an Weizen, Botrytis cinera (Grauschimmel) an Erdbeeren, Gemüse, Zierpflanzen und Reben, Cercospora arachidicola an Erdnüssen, Pseudocercosporella herpotrichoides an Weizen und Gerste, Pyricularia oryzae an Reis, Phytophthora infestans an Kartoffeln und Tomaten, Pseudoperonospora-Arten an Kürbisgewächsen und Hopfen, Plasmopara viticola an Reben, Alternaria-Arten an Gemüse und Obst sowie Fusarium- und Verticillium-Arten.

Sie sind außerdem im Materialschutz (z.B. Holzschutz) anwendbar, beispielsweise gegen Paecilomyces variotii.

Die Verbindungen I und/oder II und III können gleichzeitig gemeinsam oder getrennt oder nacheinander aufgebracht werden, wobei die Reihenfolge bei getrennter Applikation im allgemeinen keine Auswirkung auf den Bekämpfungserfolg hat.

Die Verbindungen I und/oder II und III werden üblicherweise in einem Gewichtsverhältnis von 200:1 bis 0,1: 1, vorzugsweise 100:1 bis 1:1, insbesondere 50:1 bis 5:1 (III:I und/oder II) angewendet.

Die Aufwandmengen der erfindungsgemäßen Mischungen liegen im allgemeinen je nach Art des gewünschten Effekts für die Verbindungen I und/oder II bei 0,005 bis 0,5 kg/ha, vorzugsweise 0,01 bis 0,5 kg/ha, insbesondere 0,01 bis 0,3 kg/ha.

Die Aufwandmengen für die Verbindungen III liegen entsprechend bei 0,1 bis 10 kg/ha, vorzugsweise 0,5 bis 5 kg/ha, insbesondere 1 bis 4 kg/ha.

Bei der Saatgutbehandlung werden im allgemeinen Aufwandmengen an Mischung von 0,001 bis 100 g/kg Saatgut, vcrzugsweise 0,01 bis 50 g/kg, insbesondere 0,01 bis 10 g/kg verwendet.

Sofern für Pflanzen pathogene Schadpilze zu bekämpfen sind, erfolgt die getrennte oder gemeinsame Applikation der Verbindungen I und/oder II und II oder der Mischungen aus den Verbindungen I und/oder II und II durch Besprühen oder Bestäuben der Samen, der Pflanzen oder der Böden vor oder nach der Aussaat der Pflanzen oder vor oder nach dem Auflaufen der Pflanzen.

Die erfindungsgemäßen fungiziden synergistischen Mischungen bzw. die Verbindungen I und/oder II und III können beispielsweise in Form von direkt versprühbaren Lösungen, Pulver und Suspensionen oder in Form von hochprozentigen wäßrigen, öligen oder sonstigen Suspensionen, Dispersionen, Emulsionen, Öldispersionen, Pasten, Stäubemitteln, Streumitteln oder Granulaten aufbereitet und durch Versprühen, Vernebeln, Verstäuben, Verstreuen oder Gießen angewendet werden. Die Anwendungsform ist abhängig vom Verwendungszweck; sie soll in jedem Fall eine möglichst feine und gleichmäßige Verteilung der erfindungsgemäßen Mischung gewährleisten.

Die Formulierungen werden in an sich bekannter Weise hergestellt, z.B. durch Zugabe von Lösungsmitteln und/oder Trägerstoffen. Den Formulierungen werden üblicherweise inerte Zusatzstoffe wie Emulgiermittel oder Dispergiermittel beigemischt.

Als oberflächenaktive Stoffe kommen die Alkali-, Erdalkali-, Ammoniumsalze von aromatischen Sulfonsäuren, z.B. Lignin-, Phenol-, Naphthalin- und Dibutylnaphthalinsulfonsäure, sowie von Fettsäuren, Alkyl- und Alkylarylsulfonaten, Alkyl-, Laurylether- und Fettalkoholsulfaten, sowie Salze sulfatierter Hexa-, Hepta- und Octadecanole oder Fettalkoholglycolethern, Kondensationsprodukte von sulfoniertem Naphthalin und seinen Derivaten mit Formaldehyd,

Kondensationsprodukte des Naphthalins bzw. der Naphthalinsulfonsäuren mit Phenol und Formaldehyd, Polyoxyethylenoctylphenolether, ethoxyliertes Isooctyl-, Octyl- oder Nonylphenol, Alkylphenol- oder Tributylphenylpolyglycolether, Alkylarylpolyetheralkohole, Isotridecylalkohol, Fettalkoholethylenoxid- Kondensate, ethoxyliertes Rizinusöl, Polyoxyethylenalkylether oder Polyoxypropylen, Laurylalkoholpolyglycoletheracetat, Sorbitester, Lignin-Sulfitablaugen oder Methylcellulose in Betracht.

Pulver, Streu- und Stäubemittel können durch Mischen oder gemeinsames Vermahlen der Verbindungen I und/oder II oder III oder der Mischung aus den Verbindungen I und/oder II und III mit einem festen Trägerstoff hergestellt werden.

Granulate (z.B. Umhüllungs-, Imprägnierungs- oder Homogengranulate) werden üblicherweise durch Bindung des Wirkstoffs oder der Wirkstoffe an einen festen Trägerstoff hergestellt.

Als Füllstoffe bzw. feste Trägerstoffe dienen beispielsweise Mineralerden wie Silicagel, Kieselsäuren, Kieselgele, Silikate, Talkum, Kaolin, Kalkstein, Kalk, Kreide, Bolus, Löß, Ton, Dolomit, Diatomeenerde, Kalzium- und Magnesiumsulfat, Magnesiumoxid, gemahlene Kunststoffe, sowie Düngemittel wie Ammoniumsulfat, Ammoniumphosphat, Ammoniumnitrat, Harnstoffe und pflanzliche Produkte wie Getreidemehl, Baumrinden-, Holz- und Nußschalenmehl, Cellulosepulver oder andere feste Trägerstoffe.

Die Formulierungen enthalten im allgemeinen 0,1 bis 95 Gew.-%, vorzugsweise 0,5 bis 90 Gew.-% einer der Verbindungen I und/oder II oder III bzw. der Mischung aus den Verbindungen I und/oder II und III. Die Wirkstoffe werden dabei in einer Reinheit von 90 % bis 100 %, vorzugsweise 95 % bis 100 % (nach NMR- oder HPLC-Spektrum) eingesetzt.

Die Verbindungen I und/oder II und III bzw. die Mischungen oder die entsprechenden Formulierungen werden angewendet, indem man die Schadpilze, die von ihnen freizuhaltenden Pflanzen, Samen, Böden, Flächen, Materialien oder Räume mit einer fungizid wirksamen Menge der Mischung, bzw. der Verbindungen I und/oder II und III bei getrennter Ausbringung, behandelt. Die Anwendung kann vor oder nach dem Befall durch die Schadpilze erfolgen.

Die fungizide Wirkung der Verbindung und der Mischungen läßt sich durch folgende Versuche zeigen:

Die Wirkstoffe werden getrennt oder gemeinsam als 10 %ige Emulsion in einem Gemisch aus 70 Gew.-% Cyclohexanon, 20 Gew.-% Nekanil® LN (Lutensol® AP6, Netzmittel mit Emulgier- und Dispergierwirkung auf der Basis ethoxylierter Alkylphenole) und 10 Gew.-% Emulphor® EL (Emulan® EL, Emulgator auf der Basis ethoxylierter Fettalkohole) aufbereitet und entsprechend der gewünschten Konzentration mit Wasser verdünnt.

Die Auswertung erfolgt durch Feststellung der befallenen Blattflächen in Prozent. Diese Prozent-Werte werden in Wirkungsgrade umgerechnet. Die zu erwartenden Wirkungsgrade der Wirkstoffmischungen werden nach der Colby Formel [R.S. Colby, Weeds 15, 20-22 (1967)] ermittelt und mit den beobachteten Wirkungsgraden verglichen.

Colby Formel:

$$E = x + y - x \cdot y/100$$

E zu erwartender Wirkungsgrad, ausgedrückt in % der unbehandelten Kontrolle, beim Einsatz der Mischung aus den Wirkstoffen A und B in den Konzentrationen a und b

x der Wirkungsgrad, ausgedrückt in % der unbehandelten Kontrolle, beim Einsatz des Wirkstoffs A in der Konzentration a

y der Wirkungsgrad, ausgedrückt in % der unbehandelten Kontrolle, beim Einsatz des Wirkstoffs B in der Konzentration b

Der Wirkungsgrad (**W**) wird nach der Formel von Abbot wie folgt berechnet:

$$W = (1 - \alpha) \bullet 100/\beta$$

$\alpha$ entspricht dem Pilzbefall der behandelten Pflanzen in % und

$\beta$ entspricht dem Pilzbefall der unbehandelten (Kontroll-) Pflanzen in %

Bei einem Wirkungsgrad von 0 entspricht der Befall der behandelten Pflanzen demjenigen der unbehandelten Kontrollpflanzen; bei einem Wirkungsgrad von 100 weisen die behandelten Pflanzen keinen Befall auf.

Beispiele 1-10

Wirksamkeit gegen Phytophthora infestans an Tomaten

Blätter von Topfpflanzen der Sorte "Große Fleischtomate" wurden mit einer wäßrigen Suspension, die aus einer Stammlösung aus 10 % Wirkstoff, 63 % Cyclohexanon und 27 % Emulgiermittel angesetzt wurde, bis zur Tropfnässe besprüht. Am folgenden Tag wurden die Blätter mit einer wäßrigen Zoosporenaufschwemmung von Phytophthora infestans infiziert. Anschließend wurden die Pflanzen in einer wasserdampfgesättigten Kammer bei Temperaturen zwischen 16 und 18°C aufgestellt. Nach 6 Tagen hatte sich die Krautfäule auf den unbehandelten, jedoch infizierten Kontrollpflanzen so stark entwickelt, daß der Befall visuell in % ermittelt werden konnte.

Die visuell ermittelten Werte für den Prozentanteil befallener Blattfläche wurden in Wirkungsgrade als % der unbehandelten Kontrolle umgerechnet. Wirkungsgrad 0 ist gleicher Befall wie in der unbehandelten Kontrolle, Wirkungsgrad 100 ist 0 % Befall. Die zu erwartenden Wirkungsgrade für Wirkstoffkombinationen wurden nach der Colby-Formel (Colby, S.R. (Calculating synergistic and antagonistic responses of herbicide Combinaations", Weeds, 15, S. 20-22, 1967) ermittelt und mit den beobachteten Wirkungsgraden verglichen.

Tabelle 4

| Bsp. | Wirkstoff | Wirkstoffkonzentration in der Spritzbrühe in ppm | Wirkungsgrad in % der unbehandelten Kontrolle |
|---|---|---|---|
| 1v | Kontrolle (unbehandelt) | (98 % Befall) | 0 |
| 2v | A = Tab. 2A, Nr. II.2 | 16<br>4<br>1 | 8<br>8<br>0 |
| 3v | B = Tab. 2A, Nr. II.4 | 16<br>4<br>1 | 39<br>0<br>0 |
| 4v | III = Propamocarb | 125<br>63<br>31<br>16 | 18<br>8<br>8<br>0 |

Tabelle 5

| Bsp. | Wirkstoffkonzentration in der Spritzbrühe in ppm | beobachteter Wirkungsgrad | berechneter Wirkungsgrad *) |
|---|---|---|---|
| 5 | 16A + 16III | 49 | 8 |
| 6 | 16A + 31III | 49 | 15 |
| 7 | 16A + 63III | 39 | 15 |
| 8 | 16A + 125III | 69 | 24 |
| 9 | 16B + 31III | 59 | 43 |

*) berechnet nach der Colby-Formel

Tabelle 5 (fortgesetzt)

| Bsp. | Wirkstoffkonzentration in der Spritzbrühe in ppm | beobachteter Wirkungsgrad | berechneter Wirkungsgrad *) |
|---|---|---|---|
| 10 | 16B<br>+<br>63III | 59 | 43 |

*) berechnet nach der Colby-Formel

Die Ergebnisse der Beispiel 1-10 zeigen, daß der beobachtete Wirkungsgrad in allen Mischungsverhältnissen höher ist als der nach der Colby-Formel vorausberechnete Wirkungsgrad.

## Patentansprüche

**1.** Fungizide Mischung, enthaltend

a) ein Carbamat der Formel I,

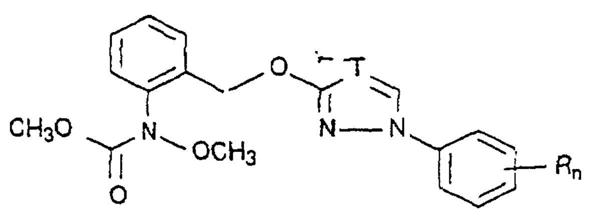

I

in der T CH oder N bedeutet, n für 0, 1 oder 2 steht und R Halogen, $C_1$-$C_4$-Alkyl oder $C_1$-$C_4$-Halogenalkyl bedeutet, wobei die Reste R verschieden sein können, wenn n für 2 steht, und/oder

b) einen Oximether der Formel II,

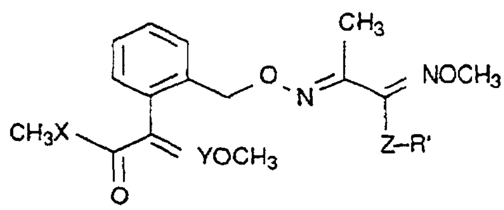

(II)

in der die Substituenten die folgende Bedeutung haben:

X Sauerstoff oder Amino (NH);

Y CH oder N;

Z Sauerstoff, Schwefel, Amino (NH) oder $C_1$-$C_4$-Alkylamino (N-$C_1$-$C_4$-Alkyl) ;

R' $C_1$-$C_6$-Alkyl, $C_1$-$C_6$-Halogenalkyl, $C_3$-$C_6$-Alkenyl, $C_2$-$C_6$-Halogenalkenyl, $C_3$-$C_6$-Alkinyl, $C_3$-$C_6$-Halogenalkinyl, $C_3$-$C_6$-Cycloalkyl-methyl, oder Benzyl, welches partiell oder vollständig halogeniert sein kann und/ oder einen bis drei der folgenden Reste tragen kann: Cyano, $C_1$-$C_4$-Alkyl, $C_1$-$C_4$-Halogenalkyl, $C_1$-$C_4$-Alkoxy, $C_1$-$C_4$-Halogenalkoxy und $C_1$-$C_4$-Alkylthio;

c) einem Carbamat der Formel III

$$(CH_3)_2N\text{-}CH_2CH_2CH_2\text{-}NH\text{-}CO_2\text{-}CH_2CH_2CH_3 \qquad III$$

in einer synergistisch wirksamen Menge.

2. Fungizide Mischung nach Anspruch 1, **dadurch gekennzeichnet, daß** das Gewichtsverhältnis der Verbindung III zu der Verbindung I und/oder II 200:1 bis 0,1:1 beträgt.

3. Verfahren zur Bekämpfung von Schadpilzen, **dadurch gekennzeichnet, daß** man die Schadpilze, deren Lebensraum oder die von ihnen freizuhaltenden Pflanzen, Samen, Böden, Flächen, Materialien oder Räume mit einer Verbindung der Formel I und/oder einer Verbindung der Formel II gemäß Anspruch 1 und der Verbindung der Formel III gemäß Anspruch 1 in einer synergistisch wirksamen Menge behandelt.

4. Verfahren nach Anspruch 3, **dadurch gekennzeichnet, daß** man eine Verbindung I und/oder eine Verbindung der Formel II gemäß Anspruch 1 und die Verbindung III gemäß Anspruch 1 gleichzeitig gemeinsam oder getrennt oder nacheinander ausbringt.

5. Verfahren nach Anspruch 3, **dadurch gekennzeichnet, daß** man die Schadpilze, deren Lebensraum oder die von ihnen freizuhaltenden Pflanzen, Samen, Böden, Flächen, Materialien oder Räume mit 0,005 bis 0,5 kg/ha einer Verbindung I und/oder einer Verbindung der Formel II gemäß Anspruch 1 behandelt.

6. Verfahren nach Anspruch 3, **dadurch gekennzeichnet, daß** man die Schadpilze, deren Lebensraum oder die von ihnen freizuhaltenden Pflanzen, Samen, Böden, Flächen, Materialien oder Räume mit 0,1 bis 10 kg/ha einer Verbindung III gemäß Anspruch 1 behandelt.

## Claims

1. A fungicidal mixture comprising

a) a carbamate of the formula I

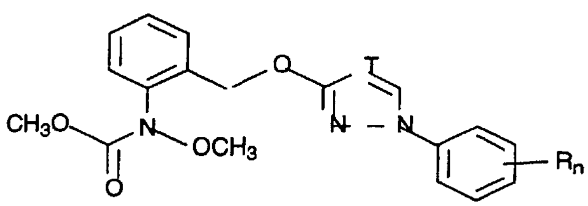

I

where T is CH or N, n is 0, 1 or 2 and R is halogen, $C_1$-$C_4$-alkyl or $C_1$-$C_4$-haloalkyl, it being possible for the radicals R to be different when n is 2, and/or

b) an oxime ether of the formula II,

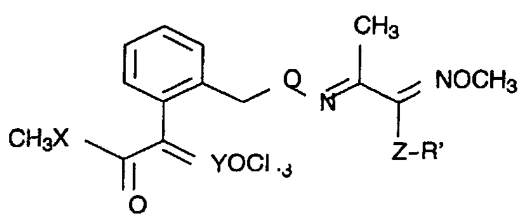

(II)

where the substituen s have the following meanings:

X is oxygen or amino (NH);

Y is CH or N;

Z is oxygen, sulfur, amino (NH) or $C_1$-$C_4$-alkylamino (N-$C_1$-$C_4$-alkyl);

R' is $C_1$-$C_6$-alkyl, $C_1$-$C_6$-haloalkyl, $C_3$-$C_6$-alkenyl, $C_2$-$C_6$-haloalkenyl, $C_3$-$C_6$-alkynyl, $C_3$-$C_6$-haloalkynyl, $C_3$-$C_6$-cycloalkylmethyl, or is benzyl which can be partially or fully halogenated and/or can have attached to it one to three of the following radicals: cyano, $C_1$-$C_4$-alkyl, $C_1$-$C_4$-haloalkyl, $C_1$-$C_4$-alkoxy, $C_1$-$C_4$-haloalkoxy and $C_1$-$C_4$-alkylthio;

c) a carbamate of the formula III

$$(CH_3)_2N\text{-}CH_2CH_2CH_2\text{-}NH\text{-}CO_2\text{-}CH_2CH_2CH_3 \qquad III$$

in a synergistically active amount.

**2.** A fungicidal mixture as claimed in claim 1 wherein the weight ratio of the compound III to the compound I and/or II is 200:1 to 0.1:1.

**3.** A method of controlling harmful fungi, which comprises treating the harmful fungi, their environment, or the plants, seeds, soils, areas, materials or spaces to be kept free from them with a compound of the formula I and/or a compound of the formula II as set forth in claim 1 and the compound of the formula III as set forth in claim 1 in a synergistically active amount.

**4.** A method as claimed in claim 3, wherein a compound I and/or a compound of the formula II as set forth in claim 1 and the compound III as set forth in claim 1 are applied simultaneously together or separately or in succession.

**5.** A method as claimed in claim 3, wherein the harmful fungi, their environment, or the plants, seeds, soils, areas, materials or spaces to be kept free from them are treated with from 0.005 to 0.5 kg/ha of a compound I and/or a compound of the formula II as set forth in claim 1.

**6.** A method as claimed in claim 3, wherein the harmful fungi, their environment, or the plants, seeds, soils, areas, materials or spaces to be kept free from them are treated with from 0.1 to 10 kg/ha of the compound III as set forth in claim 1.

## Revendications

**1.** Mélange fongicide contenant

a) un carbamate de formule I

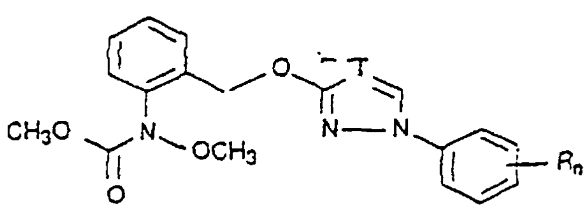

I

dans laquelle T représente CH ou N, n est égal à 0, 1 ou 2 et R représente un halogène, un groupe alkyle en C1-C4 ou halogénoalkyle en C1-C4, les substituants R pouvant être différents lorsque n est égal à 2, et/ou

b) un éther d'oxime de formule II

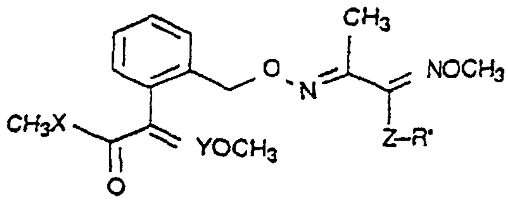

(II)

dans laquelle les symboles ont les significations suivantes :

X : l'oxygène, ou un groupe amino (NH) :

Y : CH ou N ;

Z : l'oxygène, le soufre, un groupe amino (NH) ou alkylamino en C1-C4 (N-alkyle en C1-C4) ;

R' représente un groupe alkyle en C1-C6, halogénoalkyle en C1-C6, alcényle en C3-C6, halogénoalcényle en C3-C6, alcynyle en C3-C6, halogénoalcynyle en C3-C6, (cycloalkyle en C3-C6)méthyle ou benzyle, qui peut être halogéné en totalité ou en partie et/ou qui peut porter un à trois des substituants suivants : cyano, alkyle en C1-C4, halogénoalkyle en C1-C4, alcoxy en C1-C4, halogénoalcoxy en C1-C4 et alkylthio en C1-C4 ;

c) un carbamate de formule III

$$(CH_3)_2N\text{-}CH_2CH_2CH_2\text{-}NH\text{-}CO_2\text{-}CH_2CH_2CH_3 \qquad III$$

en quantité synergétique efficace.

**2.** Mélange fongicide selon la revendication 1, **caractérisé par le fait que** les proportions relatives en poids entre le composé III et le composé I et/ou II vont de 200 : 1 à 0,1 : 1.

**3.** Procédé pour combattre les mycètes nuisibles, **caractérisé par le fait que** l'on traite les mycètes nuisibles, leur habitat ou les végétaux, semences, sols, aires, matériaux ou locaux qu'on veut protéger contre les mycètes nuisibles par un composé de formule I et/ou un composé de formule II selon la revendication 1 et le composé de formule III selon la revendication 1 en quantité synergétique efficace.

**4.** Procédé selon la revendication 3, **caractérisé par le fait que** l'on applique un composé I et/ou un composé de formule II selon la revendication 1 et le composé III selon la revendication 1, en même temps, ensemble ou séparément, ou successivement.

**5.** Procédé selon la revendication 3, **caractérisé par le fait que** l'on traite les mycètes nuisibles, leur habitat ou les végétaux, semences, sols, aires, matériaux ou locaux qu'on veut protéger contre les mycètes nuisibles par 0,005 à 0,5 kg/ha d'un composé I et/ou d'un composé de formule II selon la revendication 1.

**6.** Procédé selon la revendication 3, **caractérisé par le fait que** l'on traite les mycètes nuisibles, leur habitat ou les végétaux, semences, sols, aires, matériaux ou locaux qu'on veut protéger contre les mycètes nuisibles par 0,1 à 10 kg/ha d'un composé III selon la revendication 1.